# EUROPÄISCHE PATENTSCHRIFT

(11) **EP 0 443 140 B1**
(45) Veröffentlichungstag und Bekanntmachung des Hinweises auf die Patenterteilung: **26.05.1993**
(21) Anmeldenummer: 90124278.4
(22) Anmeldetag: 14.12.1990
(51) Int. Cl.: B65D 85/00

(54) **Verkaufseinheit für Bürsten**
Vending-unit for brushes
Unité de vente pour brosses

(30) Priorität: 20.02.1990 DE 9001785 U
(43) Veröffentlichungstag der Anmeldung: 28.08.1991
(73) Patentinhaber: CORONET-Werke Gesellschaft mit beschränkter Haftung, 69483 Wald-Michelbach (DE)
(72) Erfinder: Weihrauch, Georg, W-6948 Wald-Michelbach (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- DE-A- 2 521 201
- DE-U- 8 710 087

## Beschreibung

Die Erfindung betrifft eine Verkaufseinheit für Bürsten, die einem kurzfristigen Verbrauch unterliegen, z. B. Zahnbürsten, Geschirrbürsten od. dgl., bestehend aus einer Verpackung aus Kunststoff und wenigstens einer Bürste mit einem Borstenträger und Borsten aus Kunststoff.

Eine Verkausfseinheit für eine Zahnbürste gemäß dem Oberbegriff des Anspruchs 1 ist aus der DE-A-2 521 201 bekannt.

Eine Vielzahl von Bürsten besitzen nur für eine sehr beschränkte Zeitdauer die für ihre Funktion notwendigen optimalen Eigenschaften. Sie unterliegen entweder einem ihre optimale Funktion beeinträchtigenden erhöhten Verschleiß, worunter nicht nur eine mechanische Abnutzung, sondern jede negative Eigenschaftsveränderung verstanden wird, oder sie genügen dann, wenn sie einem hygienischen Zweck dienen, innerhalb kurzer Zeit nicht mehr den hygienischen Anforderungen. Hierunter fallen beispielsweise Zahnbürsten, deren Borsten nicht nur einem abtragenden Verschleiß, sondern vor allem einer Änderung ihrer Biegsamkeit, ihres Wideraufrichtvermögens etc. ausgesetzt sind, wodurch die Reinigungsfunktion vermindert wird. Zahnbürsten sollten deshalb in relativ kurzer Zeitfolge ausgetauscht werden.

Dies gilt nicht nur für Zahnbürsten, die mit der Hand geführt werden, sondern beispielsweise auch für Aufsteckzahnbürsten an elektrischen Geräten. Neben diesen mechanischen Abnutzungserscheinungen kommen hygienische Beeinträchtigungen hinzu, die sich vor allem bei eng stehenden Borsten in Belägen am Borstenträger, Bakterienansatz etc. zeigen.

Ähnliche Probleme sind bei Geschirrbürsten zu verzeichnen, die einem vergleichsweise rauhen Gebrauch ausgesetzt sind und vor allem schnell verschmutzen. Hier kommt erschwerend hinzu, daß sich Speisereste bzw. natürliche organische Substanzen zwischen den Borsten absetzen und zu Fäulnis und entsprechender Bakterienflora führen. In beiden vorgenannten Fällen wird der Bakterienansatz durch das stets feuchte Milieu, das vor allem in den Borstenzwischenräumen längere Zeit aufrechterhalten bleibt, gefördert.

Einem an sich gebotenen häufigeren Wechsel der Bürste steht die Hemmung des Benutzers gegenüber, einen an sich noch gebrauchsfähigen Gegenstand wegzuwerfen, auch wenn er in seiner Funktion - vom Benutzer allerdings meist nicht bemerkt - beeinträchtigt ist oder den Hygieneanforderungen nicht mehr genügt. Dies führt vor allem bei Zahnbürsten zu einem vielseits beklagten Zustand mangelnder Mundhygiene. Auf der anderen Seite muß bedacht werden, daß eine Befolgung der berechtigten hygienischen Forderungen ein anderes Problem mit sich bringen würde. Da Zahnbürsten, wie auch Geschirrbürsten heute fast ausschließlich aus Kunststoff gefertigt werden, würde bei Beachtung der hygienischen Anforderungen der Anfall an Kunststoff-Müll wachsen. Hinzu kommt, daß es sich hier um nicht verrottungsfähige Kunststoffe handelt, die infolgedessen zu einer Langzeitbelastung auf Deponien od. dgl. führen. In der Abfallverbrennung bringen sie die von mehr oder weniger allen Kunststoffen bekannten Probleme mit sich. Dieser Umstand führt in neuester Zeit dazu, daß in vielen Bereichen wieder Holzbürsten, gegebenenfalls mit Naturhaaren, aus ökologischen Gründen angepriesen werden. Diese Bürsten bringen jedoch vermehrt hygienische Probleme mit sich, die letztendlich vor vielen Jahren zu ihrer Ablösung durch Kunststoff geführt haben.

Der Erfindung liegt die Aufgabe zugrunde, eine Lösung dieser widerstreitenden Interessen zu finden, d. h. einerseits den rechtzeitigen Austausch von Kunststoff-Bürsten zu fördern, andererseits dem dadurch erhöhten Anfall von Kunststoff-Abfall wirksam zu begegnen.

Diese Aufgabe wird erfindungsgemäß bei einer verkaufseinheit des eingangs geschilderten Aufbaus dadurch gelöst, daß der Borstenträger, die Borsten und die Verpackung aus dem gleichen, wiederverwendbaren Kunststoff bestehen, und daß die Verpackung als Aufbewahrungs- und Rückgabebehältnis ausgebildet ist.

Es ist zwar bekannt, Bürsten, auch solche, bei denen Borstenträger und Borsten aus Kunststoff bestehen, in einer Kunststoff-Verpackung als Verkaufseinheit anzubieten. Dies geschieht beispielsweise bei Zahnbürsten in sogenannten Köchern. Diese Verpackungen bestehen zumeist aus Hartpolystyrol oder Polymethacrylat, wie auch im Einzelfall der Borstenträger, hingegen bestehen die Borsten zumeist aus Polyamiden. Die Erfindung schlägt für alle drei Komponenten der Verkaufseinheit einen gleichen und im übrigen wiederverwendbaren Kunststoff vor. Ferner dient bei der erfindungsgemäßen Verkaufseinheit die Verpackung auch als Aufbewahrungsbehältnis für die gebrauchte Bürste, wie auch als Rückgabebehältnis, mit denen die gebrauchte Bürste entweder an den Einzelhandel, der neue Bürsten verkauft, oder an entsprechende Sammelstellen zurückgegeben wird. Da Bürste und Verpackung aus dem gleichen Kunststoff bestehen, kann das Rückgabegut zerkleinert und wieder in den Produktionsprozeß zurückgeführt werden. Aus dem aufgearbeiteten Kunststoff können entweder andere Gegenstände oder aber auch wiederum zumindest Borstenträger und Verpackungen für Bürsten hergestellt werden.

Die Erfindung läßt sich insbesondere dann optimal umsetzen, wenn die Borsten mit dem Borstenträger durch Schweißen, Einspritzen oder durch Kraft- oder Formschluß verbunden sind.

Beim Schweißen und Einspritzen werden beide oder nur einer der Fügepartner in den Schmelzzustand überführt und die Verbindung beim Aushärten hergestellt, während bei einer kraftschlüssigen Verbindung die viskoelastischen Eigenschaften ausgenutzt werden. Eine formschlüssige Verbindung kann durch entsprechende Formgebung am Borstenbündelfuß und am Borstenträger oder durch Verankerung der Bündel mittels "Kunststoffdraht" in der herkömmlichen Stanztechnik erfolgen, wobei auch der "Kunststoffdraht" aus dem gleichen Werkstoff besteht.

Bürsten dieses Aufbaus, zu deren Herstellung also keine weiteren andersartigen Materialien als der für die Borsten und den Borstenträger verwendete Kunststoff eingesetzt wird, lassen sich zur Gänze zusammen mit der Verpackung problemlos und ohne irgendwelche Sortiervorgänge od. dgl. aufarbeiten.

In Verbindung mit der erfindungsgemäß ausgebildeten Verkaufseinheit empfehlen sich vor allem Bürsten, bei denen der Borstenträger mit den Borsten einen Borstenkopf bildet, der seinerseits auswechselbar an einem Bürstenstiel angeordnet ist. Dabei kann der Borstenträger ein eigenes Teil sein, mit dem die Borsten unter Bildung des Borstenkopfs verbunden werden. Er kann aber auch aus dem Borstenmaterial in Form einer Platte erschmolzen sein und mit dem Bürstenstiel durch Einschieben und Verrasten od. dgl. verbunden sein.

Die erstere Ausbildung empfiehlt sich vor allem bei Geschirrbürsten und ist als solche auch bekannt. Bei dieser Ausbildung wird lediglich der abgenutzte oder unhygienisch gewordene Borstenkopf vom Bürstenstiel getrennt und in die Verpackung zurückgegeben, während der Bürstenstiel beim Benutzer verbleibt und zur Aufnahme eines neuen Bürstenkopfs dient. Die zweite Ausbildung eignet sich auch für Zahnbürsten.

Eine bevorzugte Ausführungsform der Verkaufseinheit zeichnet sich durch eine eine Mehrzahl von Bürsten aufnehmende Verpackung aus. Beispielsweise kann in einer solchen Verpackung eine solche Anzahl von Bürsten oder Borstenköpfen untergebracht werden, wie sie für einen bestimmten Zeitraum bei ordnungsgemäßer Verwendung benötigt wird. Beispielsweise sollen Zahnbürsten monatlich gewechselt werden. Eine erfindungsgemäße Verkaufseinheit kann also beispielsweise den Jahresbedarf, d. h. 12 Zahnbürsten, in einer Verpackung enthalten. Der durch Entnahme einer neuen Bürste jeweils frei werdende Platz wird durch die abgenutzte Bürste ausgefüllt. Dabei läßt sich die Verpackung so gestalten, daß sie beispielsweise getrennt Räume für gebrauchte und neue Bursten aufweist. Ferner kann die Verpackung und/oder die Zahnbürste mit einem den Benutzungszeitraum angebenden Hinweis, z. B. einer Monatsangabe, versehen sein.

Besteht die Bürste aus einem Bürstenstiel und einem daran auswechselbar befestigten Borstenkopf, so kann die Verpackung eine Mehrzahl von Borstenköpfen und nur einen Bürstenstiel aufnehmen. Auch hier kann die Anzahl der Borstenköpfe auf den für einen bestimmten Zeitraum zu erwartenden Verbrauch abgestimmt werden und können die Verpackung oder die Borstenträger Angaben über den Benutzungszeitraum aufweisen.

Weiterhin kann die Verpackung Ausformungen zur Aufnahme je einer Bürste oder eines Borstenkopfs und gegebenenfalls eines Bürstenstiels aufweisen.

Hierdurch ist ein geordnetes Unterbringen der Bürsten sowohl vor Gebrauch, als auch nach dem Austausch und insbesondere auch eine Trennung von neuen und gebrauchten Bürsten möglich.

Schließlich ist die Verpackung zweckmäßigerweise luftdurchlässig, um ein Austrocknen der abgelegten Bürste zu gewährleisten.

Beispielsweise kann die Verpackung mit Löchern versehen sein. Diese Ausführung gibt weiterhin die Möglichkeit, die abgepackten Bürsten zusammen mit der Verpackung zu desinfizieren.

Bei einer solchen Ausführung empfiehlt es sich, die Verpackung mit einer Folie zu umhüllen, beispielsweise mit einer Schrumpffolie, die wiederum aus dem gleichen Kunststoff oder auch aus einem anderen umweltfreundlichen, z. B. verrottungsfähigen Werkstoff, beispielsweise aus zellulosehaltigem Material bestehen kann. Statt dessen ist es natürlich auch möglich, daß die Folie ein Teil einer zweiteiligen Verpackung bildet und mit dem anderen Teil durch Heißsiegeln verbunden ist.

Vorzugsweise bestehen die Borsten, der Borstenträger und die Verpackung, gegebenenfalls auch die Folie aus Polyester. Polyester ist schweißfähig und tiefziehfähig und im gesamten gesehen preislich nicht ungünstiger als die bisherigen Materialkombinationen.

Nachstehend ist die Erfindung anhand von in der Zeichnung wiedergegebenen Ausführungsbeispielen beschrieben. In der Zeichnung zeigen:
- Figur 1: eine Verkaufseinheit für Zahnbürsten in schematischer perspektivischer Ansicht und
- Figur 2: eine Verkaufseinheit für Geschirrbürsten in schematischer perspektivischer Ansicht.

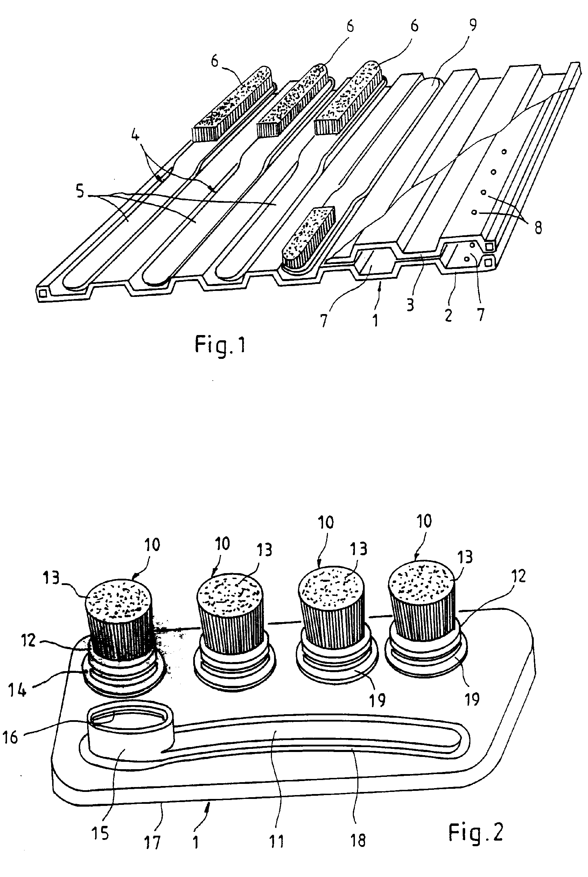

Die Verkaufseinheit gemäß Figur 1 weist eine Verpackung 1 aus Unterteil 2 und Oberteil 3, das nur teilweise wiedergegeben ist, sowie eine Mehrzahl von Zahnbürsten 4 auf. Die Zahnbürsten 4 bestehen aus einem Borstenträger 5 und Borsten 6, wobei der Borstenträger 5 zugleich den Stiel der Zahnbürste bildet. Die Verpackung 1 mit Unterteil 2 und Oberteil 3 sowie die Zahnbürsten 4 mit ihrem Borstenträger 5 und den Borsten 6 bestehen sämtlich aus dem gleichen Kunststoff. Die Borsten 6 sind mit dem Borstenträger 5 durch Schweißen, Einspritzen od. dgl. verbunden.

Beim gezeigten Ausführungsbeispiel weisen das Unterteil 2 und das Oberteil 3 der Verpackung 1 rinnenförmige Vertiefungen auf, die zusammen eine Kammer 7 zur Aufnahme je einer Zahnbürste bilden. Ferner weist die Verpackung Löcher 8 od. dgl. auf, um ein ständiges Durchlüften der Verpackung zu gewährleisten.

Die Verpackung 1 dient nicht nur Verkaufszwecken, sondern zugleich als Aufbewahrungsbehältnis und als Rückgabebehältnis für die Zahnbürsten 4. Da die Verpackung und die gesamte Zahnbürste aus dem gleichen Kunststoff bestehen, kann die zurückgegebene Verpackung 1 mit dem gesamten Inhalt in der bei Kunststoffen üblichen Weise zerkleinert und wieder dem Produktionsprozeß zugeführt werden.

Die Verpackung 1 der in Figur 1 gezeigten Verkaufseinheit nimmt beispielsweise die neuen Zahnbürsten 4 in einer bestimmten Ausrichtung auf, während die gebrauchten Zahnbürsten, von denen eine mit 9 angedeutet ist, beispielsweise umgekehrt in die Verpackung 1 eingelegt werden können. Statt dessen kann die Verpackung 1 auch dreiteilig ausgebildet sein, beispielsweise unterhalb des Unterteils 2 nochmals ein gleichartiges Teil aufweisen, um beispielsweise im oberen Teil die neuen Zahnbürsten, im unteren Teil die gebrauchten Zahnbürsten aufzunehmen.

In Figur 2 ist eine Verkaufseinheit für Geschirrbürsten wiedergegeben. Bei diesem Ausführungsbeispiel besteht die Geschirrbürste aus einem Bürstenkopf 10 und einem Stiel 11, die lösbar miteinander verbunden sind. Zu diesem Zweck ist der die Borsten 13 aufnehmende Borstenträger 12 randseitig mit einem Profil 14 versehen, während der Stiel 11 einen Kopf 15 mit einem entsprechenden Gegenprofil 16 aufweist. Der Borstenkopf 10 kann mit dem Profil 14 in dem Gegenprofil 16 des Stielkopfs 15 eingerastet, eingeschnappt oder in anderer Weise auswechselbar befestigt werden.

Die Verkaufseinheit besteht in diesem Fall wiederum aus einer Verpackung 1, einer Mehrzahl von Borstenköpfen 10 und einem einzigen Stiel 11 mit Stielkopf 15. Die Verpackung 1 weist ein Unterteil 17 auf, das mit vertieften Ausformungen 18 für den Stiel 11 und mit weiteren vertieften Ausformungen 19 für die Borstenköpfe 10 versehen ist. Das nicht gezeigte Oberteil kann entsprechende Ausformungen zur Fixierung der Borstenköpfe 10 und des Stiels 11 innerhalb der Verpackung aufweisen. Auch hier bestehen die Verpackung 1, der Stiel 11 mit Stielkopf 15 und die Borstenköpfe 10 mit dem Borstenträger 12 und den Borsten 13 sämtlich aus dem gleichen Kunststoff. Die Verpackung 1 dient sowohl als Verkaufsverpackung, wie auch zur Aufbewahrung sowie zur Rückgabe gebrauchter Borstenköpfe 10. Der Stiel 11 mit Stielkopf 15 kann zusammen mit den gebrauchten Borstenköpfen 10 der Wiederaufarbeitung zugeführt oder für weitere neue Borstenköpfe weiterverwendet werden.

## Patentansprüche

1. Verkaufseinheit für Bürsten, die einem kurzfristigen Verbrauch unterliegen, z. B. Zahnbürsten, Geschirrbürsten od. dgl., bestehend aus einer Verpackung aus Kunststoff und wenigstens einer Bürste mit einem Borstentrager und Borsten aus Kunststoff, dadurch gekennzeichnet, daß der Borstenträger (5, 12), die Borsten (6, 13) und die Verpackung (1) aus dem gleichen, wiederverwendbaren Kunststoff bestehen, und daß die Verpackung als Aufbewahrungs-und Rückgabebehältnis ausgebildet ist.

2. Verkaufseinheit nach Anspruch 1, dadurch gekennzeichnet, daß die Borsten (6, 13) mit dem Borstenträger (5, 12) durch Schweißen, Einspritzen oder durch Kraft- oder Formschluß verbunden sind.

3. Verkaufseinheit nach Anspruch 1 oder 2, dadurch gekennzeichnet, daß der Borstenträger (12) mit den Borsten (13) einen Borstenkopf (10) bildet und daß dieser auswechselbar mit einem Bürstenstiel (11) verbindbar ist.

4. Verkaufseinheit nach einem der Ansprüche 1 bis 3, dadurch gekennzeichnet, daß der Borstenträger mit den Borsten einstückig und der Borstenträger als dünne Platte ausgebildet ist, die in den Bürstenstiel einschiebbar ist.

5. Verkaufseinheit nach einem der Ansprüche 1 bis 4, gekennzeichnet durch eine eine Mehrzahl von Bürsten (4) aufnehmende Verpackung (1).

6. Verkaufseinheit nach einem der Ansprüche 1 bis 5, gekennzeichnet durch eine einen Bürstenstiel (11) und eine Mehrzahl von auswechselbaren Borstenköpfen (10) aufnehmende Verpackung (1).

7. Verkaufseinheit nach einem der Ansprüche 1 bis 6, dadurch gekennzeichnet, daß die Verpackung (1) Ausformungen (7, 18, 19) zur Aufnahme je einer Bürste (4) oder eines Borstenkopfs (10) und gegebenenfalls eines Bürstenstiels (11) aufweist.

8. Verkaufseinheit nach einem der Ansprüche 1 bis 7, dadurch gekennzeichnet, daß die Verpackung (1) luftdurchlässig ist.

9. Verkaufseinheit nach einem der Ansprüche 1 bis 8, dadurch gekennzeichnet, daß die Verpackung mit Löchern versehen ist.

10. Verkaufseinheit nach einem der Ansprüche 1 bis 9, dadurch gekennzeichnet, daß die Verpackung von einer Folie verschlossen oder umhüllt ist.

11. Verkaufseinheit nach einem der Ansprüche 1 bis 10, dadurch gekennzeichnet, daß Borsten, Borstenträger und Verpackung aus Polyester bestehen.

## Claims

1. Vending unit for brushes which have a short life, e.g. tooth-brushes, crockery brushes, etc., comprising a plastics material pack and at least one brush with a bristle carrier and bristles made from plastic, characterized in that the bristle carrier (5,12), the bristles (6,13) and the pack (1) are made from the same, reusable plastics material and that the pack is constructed as a storage and return container.

2. Vending unit according to claim 1, characterized in that the bristles (6,13) are connected to the bristle carrier (5,12) by welding, injection moulding or by self-closure/force-closure.

3. Vending unit according to claim 1 or 2, characterized in that with the bristles (13) the bristle carrier (12) forms a bristle head (10) and that the latter is interchangeably connectable to a brush handle (11).

4. Vending unit according to one of the claims 1 to 3, characterized in that the bristle carrier is constructed in one piece with the bristles and in the form of a thin plate, which can be inserted in the brush handle.

5. Vending unit according to one of the claims 1 to 4, characterized by a pack (1) receiving a plurality of brushes (4).

6. Vending unit according to one of the claims 1 to 5, characterized by a pack (1) receiving a brush handle (11) and a plurality of replaceable bristle heads (10).

7. Vending unit according to one of the claims 1 to 6, characterized in that the park (1) has shaped out portions (7,18,19) for in each case receiving a brush (4) or a bristle head (10) and optionally a brush handle (11).

8. Vending unit according to one of the claims 1 to 7, characterized in that the pack (1) is permeable to air.

9. Vending unit according to one of the claims 1 to 8, characterized in that the pack is perforated.

10. Vending unit according to one of the claims 1 to 9, characterized in that the pack is closed or enveloped by a film.

11. Vending unit according to one of the claims 1 to 10, characterized in that the bristles, bristle carrier and pack are made from polyester.

## Revendications

1. Unité de vente pour des brosses soumises à un cycles de consommation rapide, par exemple des brosses à dents, des brosses à vaisselle ou analogues, comprenant un emballage en matière plastique et au moins une brosse avec un support de poils et des poils en matière plastique, **caractérisé en ce** que le support de poils (5, 12) les poils (6, 13) et l'emballage (1) sont constitués de la même matière plastique réutilisable, et que l'emballage est conformé en récipient de conservation et de restitution.

2. Unité de vente selon la revendication 1, caractérisée en ce que les poils (6, 13) sont rattachés au support de poils (5, 12) par soudage, par moulage par injection ou par adhérence ou engagement positif.

3. Unité de vente selon l'une des revendications 1 ou 2, caractérisée en ce que le support de poils (12) forme avec les poils (13) une tête de poils (10), et que ladite tête de poils peut être couplée de manière interchangeable avec un manche de brosse (11).

4. Unité de vente selon l'une des revendications 1 à 3, caractérisée en ce que le support de poils est conformé d'un seul tenant avec les poils et que le support de poils est réalisé sous la forme d'une mince plaque qui peut être engagée dans le manche de brosse.

5. Unité de vente selon l'une des revendications 1 à 4, caractérisée en ce qu'elle comprend un emballage (1) recevant une pluralité de brosses (4).

6. Unité de vente selon l'une des revendications 1 à 5, caractérisée en ce qu'elle comprend un emballage (1) recevant un manche de brosse (11) et une pluralité de têtes de poils (10) interchangeables.

7. Unité de vente selon l'une des revendications 1 à 6, caractérisée en ce que l'emballage (1) présente des creux profilés (7, 18, 19) destinés à recevoir chacun une brosse (4) ou une tête de poils (10) et éventuellement un manche de brosse (11).

8. Unité de vente selon l'une des revendications 1 à 7, caractérisée en ce que l'emballage (1) est perméable à l'air.

9. Unité de vente selon l'une des revendications 1 à 8, caractérisée en ce que l'emballage est muni de trous.

10. Unité de vente selon l'une des revendications 1 à 9, caractérisée en ce que l'emballage est fermé ou enveloppé par une feuille.

11. Unité de vente selon l'une des revendications 1 à 10, caractérisée en ce que les poils, le support de poils et l'emballage sont réalisés en polyester.
